# EUROPÄISCHE PATENTSCHRIFT

(11) **EP 4 446 258 B1**
(45) Veröffentlichungstag und Bekanntmachung des Hinweises auf die Patenterteilung: **25.02.2026**
(21) Anmeldenummer: 24169368.8
(22) Anmeldetag: 10.04.2024
(51) Int. Cl.: B65G 15/32, B65G 15/42, B65G 23/06, B65G 15/64

(54) **TRANSPORTSYSTEM UMFASSEND EIN ELASTISCHES TRANSPORTBAND**
TRANSPORT SYSTEM COMPRISING AN ELASTIC CONVEYOR BELT
SYSTÈME DE TRANSPORT COMPRENANT UNE BANDE TRANSPORTEUSE ÉLASTIQUE

(30) Priorität: 11.04.2023 DE 102023109087
(43) Veröffentlichungstag der Anmeldung: 16.10.2024
(73) Patentinhaber: Wallroth F & E UG, 56337 Arzbach (DE)
(72) Erfinder: Knopp, Hans Werner, 56412 Großholbach (DE)
(74) Vertreter: Bernsmann, Falk

(56) Entgegenhaltungen:
- EP-A1- 3 623 321
- DE-A1- 102021 127 421

## Beschreibung

### Technisches Gebiet

Die Erfindung betrifft ein Transportsystem mit einem elastischen Transportband zum Transport von Gütern auf dem Transportband in eine Transportrichtung. Das Transportband weist eine Führungsfläche auf, wobei in die Führungsfläche mindestens zwei entlang der Transportrichtung verlaufende Führungsnuten zur Führung des Transportbandes entlang der Transportrichtung eingebracht sind, wobei die Führungsnuten quer zur Transportrichtung mit einem Nutmittenabstand voneinander angeordnet sind. Das Transportsystem umfasst mindestens zwei Führungselemente, von denen jeweils genau eines zur Führung des Transportbandes entlang der Transportrichtung in jeweils eine der Führungsnuten eingreift, wobei die Führungselemente quer zur Transportrichtung mit einem Elementmittenabstand voneinander angeordnet sind.

### Stand der Technik

Gattungsgemäße Transportsysteme mit elastischen Transportbändern sind beispielsweise aus den Druckschriften EP 2 679 522 A1, EP 3 590 694 A1 und EP 3 623 321 A1 bekannt. Solche Transportbänder werden entlang der Transportrichtung geführt, indem ein oder mehrere Führungselemente in Führungsnuten der Transportbänder eingreifen. Für eine präzise und zuverlässige Führung ist in der Regel eine Vielzahl von Führungselemente und Führungsnuten vorgesehen. Dadurch kommt es jedoch zu einer erhöhten Reibung und einem erhöhten Verschleiß zwischen dem Transportband und den Führungselementen. Die Druckschrift DE 10 2021 127 421 A1 offenbart ein Transportsystem gemäß dem Oberbegriff des Anspruchs 1.

### Technische Aufgabe

Die Aufgabe der Erfindung ist es, ein Transportsystem mit einem elastischen Transportband zu schaffen, das eine präzise, zuverlässige und reibungsarme Führung des Transportbandes ermöglicht.

### Technische Lösung

Die vorliegende Erfindung stellt ein Transportsystem gemäß Anspruch 1 bereit, das die technische Aufgabe löst. Vorteilhafte Ausgestaltungen sind Gegenstand der abhängigen Ansprüche.

Das erfindungsgemäße Transportsystem umfasst ein elastisches Transportband, das zum Transport von Gütern auf dem Transportband in eine Transportrichtung in dem Transportsystem ausgelegt ist. Dazu weist das Transportband vorzugsweise eine Tragfläche zum Tragen der Güter auf.

Das Transportband weist eine Führungsfläche auf, die beispielsweise der Tragfläche gegenüberliegt.

In die Führungsfläche sind mindestens zwei, beispielsweise 5 bis 20, insbesondere 10 bis 15, entlang der Transportrichtung verlaufende Führungsnuten zur Führung des Transportbandes entlang der Transportrichtung eingebracht.

Die Führungsnuten sind quer zur Transportrichtung mit einem Nutmittenabstand voneinander angeordnet. Als Nutmittenabstand wird der Abstand der Mittellinien voneinander benachbarter Nuten bezeichnet.

Das Transportsystem umfasst mindestens zwei Führungselemente, von denen jeweils genau eines zur Führung des Transportbandes entlang der Transportrichtung in jeweils eine der Führungsnuten eingreift. Die Führungselemente umfassen beispielsweise Führungsbolzen oder Führungsstege. Die Führungselement sind beispielsweise auf einer Mantelfläche einer Führungsrolle des Transportsystems, um die das Transportband geführt ist, angeordnet.

Die Führungselemente sind quer zur Transportrichtung mit einem Elementmittenabstand voneinander angeordnet. Als Elementmittenabstand wird der Abstand der Mittellinien voneinander benachbarter Führungselemente bezeichnet.

Der Nutmittenabstand in einem unbelasteten Ruhezustand des Transportbandes ist um einen Zusatzmittenabstand größer gewählt als der Elementmittenabstand.

### Vorteilhafte Wirkungen

Das Transportband ist elastisch, sodass es sich in einem Betriebszustand, in dem das Transportband in dem Transportsystem zum Transport der Güter verwendet wird, reversibel verformt. Eine Bandlänge des Transportbandes entlang der Transportrichtung kann beispielsweise in dem Betriebszustand relativ zu dem Ruhezustand gedehnt sein, beispielsweise um 0,5 % bis 10 %, insbesondere um 1 % bis 5 %, vorzugsweise um 2 %. Durch die Dehnung der Länge des Transportbandes kann es in einem durch die Führungsnuten geschwächten Bereich des Transportbandes zu einer Kontraktion einer Bandbreite des Transportbandes parallel zur Führungsfläche und quer zur Transportrichtung kommen.

Die Kontraktion der Bandbreite im Bereich der Führungsnuten führt dazu, die Führungsnuten in dem Betriebszustand des Transportbandes näher beieinander liegen als in dem Ruhezustand des Transportbandes. Wenn der Nutmittenabstand in dem Ruhezustand wie bei bekannten Transportbändern dem Elementmittenabstand entspräche, würden die Führungselemente im Betriebszustand aufgrund der Kontraktion der Bandbreite nicht passgenau in die Führungsnuten eingreifen, sodass eine erhöhte Reibung und ein erhöhter Verschleiß entstünden.

Die Tatsache, dass der Nutmittenabstand im Ruhezustand erfindungsgemäß um den Zusatzmittenabstand größer gewählt ist als der Elementmittenabstand, stellt sicher, dass die Führungselemente im Betriebszustand passgenau in die Führungsnuten eingreifen und somit eine zuverlässige, präzise, reibungsarme und verschleißarme Führung gewährleisten.

### Beschreibung der Ausführungsarten

Der Zusatzmittenabstand beträgt vorzugsweise von 0,05 % bis 5 %, bevorzugt von 0,1 % bis 2,5 %, besonders bevorzugt 1 %, des Elementmittenabstands. Ein solcher Zusatzmittenabstand ist für typische Transportbänder besonders wirksam. Bei einem Elementmittenabstand von 10,0 mm kann der Zusatzmittenabstand beispielsweise 0,1 mm betragen.

Eine Banddicke des Transportbandes orthogonal zur Führungsfläche beträgt vorzugsweise von 0,1 mm bis 20 mm, bevorzugt von 1 mm bis 10 mm, besonders bevorzugt 2 mm. Eine Kontraktion der Bandbreite im Bereich der Führungsnuten tritt insbesondere bei Transportbändern mit geringer Banddicke, wie beispielsweise der genannten Banddicke, auf. Daher ist der Zusatzmittenabstand bei solchen Transportbändern besonders wirksam.

Die Führungsnuten weisen vorzugsweise eine Nuttiefe orthogonal zur Führungsfläche und eine Nutbreite parallel zur Führungsfläche und orthogonal zur Transportrichtung auf, wobei die Nuttiefe und/oder die Nutbreite von 0,25 mm bis 5 mm, bevorzugt von 0,5 mm bis 2,5 mm, besonders bevorzugt 1 mm, beträgt. Eine Kontraktion der Bandbreite im Bereich der Führungsnuten tritt insbesondere bei Führungsnuten mit großer Nuttiefe und/oder Nutbreite, wie beispielsweise der genannten Nuttiefe und/oder Nutbreite, auf. Daher ist der Zusatzmittenabstand bei solchen Führungsnuten besonders wirksam.

Die Führungsnuten weisen vorzugsweise eine Nuttiefe orthogonal zur Führungsfläche und eine Nutbreite parallel zur Führungsfläche und orthogonal zur Transportrichtung auf, wobei die Nuttiefe und/oder die Nutbreite von 25 % bis 75 %, bevorzugt von 40 % bis 60 %, besonders bevorzugt 50 %, einer Banddicke des Transportbandes orthogonal zur Führungsfläche beträgt. Eine Kontraktion der Bandbreite im Bereich der Führungsnuten tritt insbesondere bei Führungsnuten mit relativ zur Banddicke großer Nuttiefe und/oder Nutbreite, wie beispielsweise der genannten Nuttiefe und/oder Nutbreite, auf. Daher ist der Zusatzmittenabstand bei solchen Führungsnuten besonders wirksam.

Die Führungsnuten weisen vorzugsweise eine Nutbreite parallel zur Führungsfläche und orthogonal zur Transportrichtung auf, wobei die Führungselemente eine Elementbreite parallel zur Führungsfläche und quer zur Transportrichtung aufweisen, wobei die Nutbreite im Ruhezustand des Transportbandes um eine Zusatznutbreite größer gewählt ist als die Elementbreite. Dabei beträgt die Zusatznutbreite beispielsweise einen Anteil des Zusatzmittenabstands, wobei der Anteil des Zusatzmittenabstands beispielsweise dem Anteil der Nutbreite an dem Nutmittenabstand entspricht.

Dadurch, dass die Nutbreite um die Zusatznutbreite größer gewählt ist als die Elementbreite, wird sichergestellt, dass das Führungselement auch dann in die Führungsnut passt, wenn die Bandbreite des Transportbands in dem Betriebszustand geringer als in dem Ruhezustand ist, sodass das Transportband zuverlässig, präzise, reibungsarm und verschleißarm geführt wird.

Das Transportband weist an der Führungsfläche zwischen den Führungsnuten einen Steg auf, wobei der Steg eine Stegbreite parallel zur Führungsfläche und orthogonal zur Transportrichtung aufweist. Das Transportsystem weist zwischen den Führungselementen einen Zwischenraum auf, wobei der Zwischenraum eine Zwischenraumbreite parallel zur Führungsfläche und quer zur Transportrichtung aufweist. Die Stegbreite im Ruhezustand des Transportbandes ist um eine Zusatzstegbreite größer gewählt als die Zwischenraumbreite.

Dadurch, dass die Stegbreite um die Zusatzstegbreite größer gewählt ist als die Zwischenraumbreite, wird sichergestellt, dass die Führungselemente auch dann passend zu den Führungsnuten angeordnet sind, wenn die Bandbreite des Transportbands im Betriebszustand geringer als im Ruhezustand ist, sodass das Transportband zuverlässig, präzise, reibungsarm und verschleißarm geführt wird.

Die Zusatzstegbreite beträgt beispielsweise einen Anteil des Zusatzmittenabstands, wobei der Anteil des Zusatzmittenabstands beispielsweise dem Anteil der Stegbreite an dem Nutmittenabstand entspricht.

Die Zusatzstegbreite entspricht beispielsweise dem Zusatzmittenabstand, sodass die Stegbreite relativ zur Zwischenraumbreite mit der Zusatzstegbreite versehen ist, aber die Nutbreite relativ zur Elementbreite keine Zusatznutbreite aufweist. In dieser Ausgestaltung lässt sich der Zusatzmittenabstand besonders einfach, präzise und flexibel einstellen, weil nur der Abstand der Werkzeuge, mit denen die Führungsnuten in die Führungsfläche eingebracht werden, zueinander aber nicht die Art oder Form der Werkzeuge eingestellte werden muss, um die Stegbreite und somit den Zusatzmittenabstand einzustellen.

Die Führungsnuten weisen vorzugsweise parallel zur Führungsfläche und orthogonal zur Transportrichtung eine Öffnungsbreite in einer Ebene mit der Führungsfläche und eine Bodenbreite in einer um eine Nuttiefe der Führungsnut von der Führungsfläche beabstandeten Ebene auf, wobei die Öffnungsbreite größer ist als die Bodenbreite. Die Führungsnuten erweitern sich also auf die Führungselemente zu, sodass sich die Führungselemente selbsttätig in den Führungsnuten zentrieren. Dadurch ist auch dann eine zuverlässige, präzise, reibungsarme und verschleißarme Führung möglich, wenn eine Nutbreite der Führungsnuten, beispielsweise durch eine Kontraktion der Bandbreite des Transportbandes, nicht exakt einer Elementbreite der Führungselemente entspricht. Daher wird diese Ausgestaltung besonders vorteilhaft mit der Ausgestaltung kombiniert, in der die Zusatzstegbreite des Steges zwischen den Führungsnuten dem Zusatzmittenabstand entspricht.

Die sich erweiternden Führungsnuten haben beispielsweise eine Querschnittsfläche orthogonal zur Transportrichtung, die wannenförmig mit einem planen Boden und konkav gewölbten Flanken oder trapezförmig mit einem planen Boden und planen Flanken ist.

Die Bodenbreite ist bevorzugt null, wobei die Führungsnuten beispielsweise eine Querschnittsfläche orthogonal zur Transportrichtung haben, die v-förmig, u-förmig, parabelförmig oder kreissegmentförmig ist. Führungsnuten mit verschwindender Bodenbreite sind besonders einfach herstellbar.

Das Transportband ist beispielsweise monolithisch und besteht vorzugsweise aus einem Thermoplast oder aus einem Elastomer, bevorzugt aus einem Polyurethan. Elastomere, insbesondere Polyurethane, haben bezüglich Elastizität, Haltbarkeit, Tragfähigkeit und Reinigungsfähigkeit besonders vorteilhafte Eigenschaften für ein Transportband. Polyurethan hat besonders vorteilhafte Eigenschaften für den Einsatz in der Lebensmittelindustrie.

### Beispiel

In einer beispielhaften Ausgestaltung besteht das Transportband aus Polyurethan und hat eine Banddicke von 2 mm. Das Transportband wird im Betriebszustand in dem zugehörigen Transportsystem relativ zum unbelasteten Ruhezustand entlang der Transportrichtung um 2 % gedehnt. Die Führungselemente des Transportsystems haben einen Elementmittenabstand von 10,0 mm. Der Zusatzmittenabstand beträgt 0,1 mm, sodass sich ein Nutmittenabstand der Führungsnuten des Transportbandes im Ruhezustand von 10,1 mm ergibt.

### Kurze Beschreibung der Zeichnungen

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind.
Figur 1 zeigt schematisch ein erfindungsgemäßes Transportsystem.
Figur 2 zeigt schematisch eine Führungsnut des Transportbandes eines erfindungsgemäßen Transportsystems.

### Fig.1

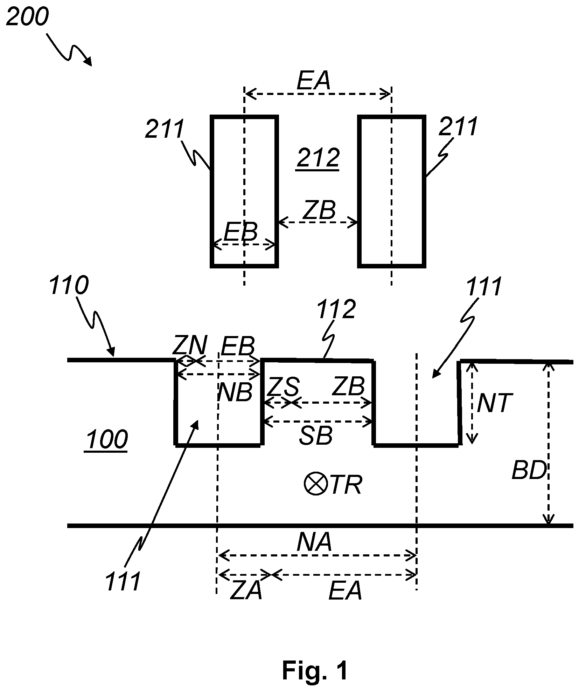

Figur 1 zeigt schematisch ein erfindungsgemäßes Transportsystem 200 als Querschnitt orthogonal zur Transportrichtung TR des Transportbandes 100 des Transportsystems 200.

Das Transportband weist 100 eine flächige Führungsfläche 110 auf, wobei in die Führungsfläche 110 mindestens zwei entlang der Transportrichtung TR verlaufende Führungsnuten 111 zur Führung des Transportbandes 100 entlang der Transportrichtung TR eingebracht sind. Die Führungsnuten 111 sind quer zur Transportrichtung TR mit einem Nutmittenabstand NA voneinander angeordnet.

Das Transportsystem 200 umfasst mindestens zwei Führungselemente 211, beispielsweise Führungsstege, von denen jeweils genau eines zur Führung des Transportbandes 100 entlang der Transportrichtung TR in jeweils eine der Führungsnuten 111 eingreift. Die Führungselemente 211 sind quer zur Transportrichtung TR mit einem Elementmittenabstand EA voneinander angeordnet.

Der Nutmittenabstand NA in dem gezeigten unbelasteten Ruhezustand des Transportbandes 100 ist um einen Zusatzmittenabstand ZA größer gewählt als der Elementmittenabstand EA.

Die Führungsnuten 111 weisen eine Nuttiefe NT orthogonal zur Führungsfläche 110 und eine Nutbreite NB parallel zur Führungsfläche 110 und orthogonal zur Transportrichtung TR auf. Die Nuttiefe NT und/oder die Nutbreite NB beträgt im Ruhezustand beispielsweise von 25 % bis 75 % einer Banddicke BD des Transportbandes 100 orthogonal zur Führungsfläche 110.

Die Führungselemente 211 weisen eine Elementbreite EB parallel zur Führungsfläche 110 und quer zur Transportrichtung TR auf. Die Nutbreite NB im Ruhezustand ist beispielsweise um eine Zusatznutbreite ZN größer gewählt als die Elementbreite EB.

Das Transportband 100 weist an der Führungsfläche 110 zwischen den Führungsnuten 111 einen Steg 112 auf, wobei der Steg 112 eine Stegbreite SB parallel zur Führungsfläche 110 und orthogonal zur Transportrichtung TR aufweist. Das Transportsystem 200 weist zwischen den Führungselementen 211 einen Zwischenraum 212 auf, wobei der Zwischenraum 212 eine Zwischenraumbreite ZB parallel zur Führungsfläche 110 und quer zur Transportrichtung TR aufweist. Die Stegbreite SB im Ruhezustand ist um eine Zusatzstegbreite ZS größer gewählt als die Zwischenraumbreite ZB.

### Fig.2

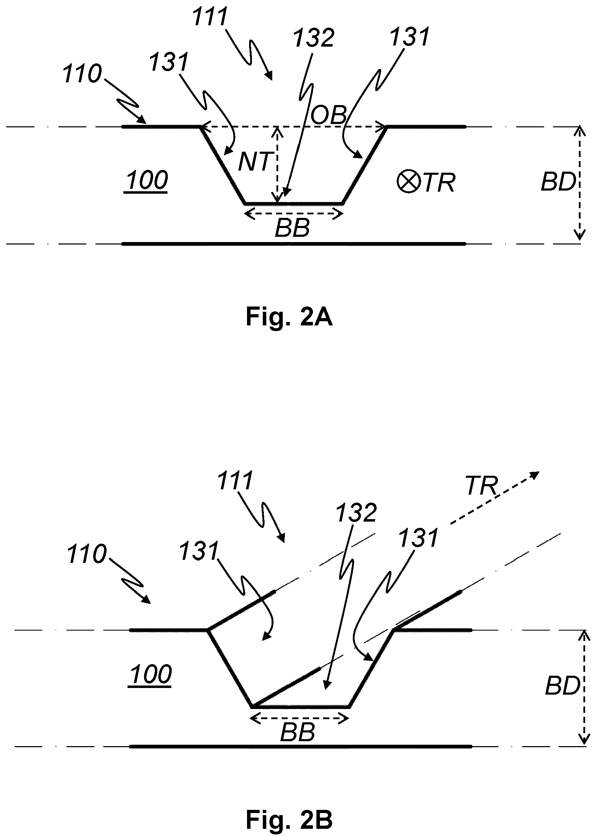

Figur 2 zeigt schematisch eine Führungsnut 111 in der Führungsfläche 110 des Transportbandes 100 eines erfindungsgemäßen Transportsystems 200 als Querschnitt orthogonal zur Transportrichtung TR des Transportbandes 100 (Fig.2A) und als Perspektivdarstellung (Fig.2B).

Die gezeigte Führungsnut 111 weist parallel zur Führungsfläche 110 und orthogonal zur Transportrichtung TR eine Öffnungsbreite OB in einer Ebene mit der Führungsfläche 110 und eine Bodenbreite BB in einer um eine Nuttiefe NT der Führungsnut 111 von der Führungsfläche 110 beabstandeten Ebene auf, wobei die Öffnungsbreite OB größer ist als die Bodenbreite BB.

Die Führungsnut 111 hat beispielsweise eine plane und zur Führungsfläche 110 parallele Bodenfläche 132 und zwei plane und schräg zur Führungsfläche 110 ausgerichtete Flankenflächen 131, die die Bodenfläche 132 mit der Führungsfläche 110 verbinden. Dadurch hat die Führungsnut 111 eine trapezförmige Querschnittsfläche orthogonal zur Transportrichtung TR. Wenn die Bodenbreite BB bei planen und schräg zur Führungsfläche 110 ausgerichteten Flankenflächen 131 null wäre, hätte die Führungsnut 111 eine v-förmige Querschnittsfläche.

**Liste der Bezugszeichen**

| | | | |
|---|---|---|---|
| 100 | Transportband | EB | Elementbreite |
| 110 | Führungsfläche | NA | Nutmittenabstand |
| 111 | Führungsnut | NB | Nutbreite |
| 112 | Steg | NT | Nuttiefe |
| 131 | Flankenfläche | OB | Öffnungsbreite |
| 132 | Bodenfläche | SB | Stegbreite |
| 200 | Transportsystem | TR | Transportrichtung |
| 211 | Führungselement | ZA | Zusatzmittenabstand |
| 212 | Zwischenraum | ZB | Zwischenraumbreite |
| BB | Bodenbreite | ZN | Zusatznutbreite |
| BD | Banddicke | ZS | Zusatzstegbreite |
| EA | Elementmittenabstand | | |

## Patentansprüche

1. Transportsystem (200) umfassend ein elastisches Transportband (100) zum Transport von Gütern auf dem Transportband (100) in eine Transportrichtung (TR) in dem Transportsystem (200),
a. wobei das Transportband (100) eine Führungsfläche (110) aufweist,
b. wobei in die Führungsfläche (110) mindestens zwei entlang der Transportrichtung (TR) verlaufende Führungsnuten (111) zur Führung des Transportbandes (100) entlang der Transportrichtung (TR) eingebracht sind,
c. wobei die mindestens zwei Führungsnuten (111) quer zur Transportrichtung (TR) mit einem Nutmittenabstand (NA) voneinander angeordnet sind,
d. wobei das Transportsystem (200) mindestens zwei Führungselemente (211) umfasst, von denen jeweils genau eines zur Führung des Transportbandes (100) entlang der Transportrichtung (TR) in jeweils eine der mindestens zwei Führungsnuten (111) eingreift,
e. wobei die mindestens zwei Führungselemente (211) quer zur Transportrichtung (TR) mit einem Elementmittenabstand (EA) voneinander angeordnet sind,
f. wobei der Nutmittenabstand (NA) in einem unbelasteten Ruhezustand des Transportbandes (100) um einen Zusatzmittenabstand (ZA) größer gewählt ist als der Elementmittenabstand (EA),
g. wobei das Transportband (100) an der Führungsfläche (110) zwischen den mindestens zwei Führungsnuten (111) einen Steg (112) aufweist,
h. wobei der Steg (112) eine Stegbreite (SB) parallel zur Führungsfläche (110) und orthogonal zur Transportrichtung (TR) aufweist,
i. wobei das Transportsystem (200) zwischen den mindestens zwei Führungselementen (211) einen Zwischenraum (212) aufweist,
j. wobei der Zwischenraum (212) eine Zwischenraumbreite (ZB) parallel zur Führungsfläche (110) und quer zur Transportrichtung (TR) aufweist,
**dadurch gekennzeichnet, dass**
k. die Stegbreite (SB) im Ruhezustand des Transportbandes (100) um eine Zusatzstegbreite (ZS) größer gewählt ist als die Zwischenraumbreite (ZB).

2. Transportsystem (200)nach Anspruch 1,
wobei der Zusatzmittenabstand (ZA) von 0,05 % bis 5 % des Elementmittenabstands (EA) beträgt.

3. Transportsystem (200)nach einem der Ansprüche 1 bis 2,
wobei eine Banddicke (BD) des Transportbandes (100) orthogonal zur Führungsfläche (110) von 0,1 mm bis 20 mm beträgt.

4. Transportsystem (200)nach einem der Ansprüche 1 bis 3,
a. wobei die mindestens zwei Führungsnuten (111) eine Nuttiefe (NT) orthogonal zur Führungsfläche (110) und eine Nutbreite (NB) parallel zur Führungsfläche (110) und orthogonal zur Transportrichtung (TR) aufweisen,
b. wobei die Nuttiefe (NT) und/oder die Nutbreite (NB) von 0,25 mm bis 5 mm beträgt.

5. Transportsystem (200)nach einem der Ansprüche 1 bis 4,
a. wobei die mindestens zwei Führungsnuten (111) eine Nuttiefe (NT) orthogonal zur Führungsfläche (110) und eine Nutbreite (NB) parallel zur Führungsfläche (110) und orthogonal zur Transportrichtung (TR) aufweisen,
b. wobei die Nuttiefe (NT) und/oder die Nutbreite (NB) im Ruhezustand des Transportbandes (100) von 25 % bis 75 % einer Banddicke (BD) des Transportbandes (100) orthogonal zur Führungsfläche (110) beträgt.

6. Transportsystem (200)nach einem der Ansprüche 1 bis 5,
a. wobei die mindestens zwei Führungsnuten (111) eine Nutbreite (NB) parallel zur Führungsfläche (110) und orthogonal zur Transportrichtung (TR) aufweisen,
b. wobei die mindestens zwei Führungselemente (211) eine Elementbreite (EB) parallel zur Führungsfläche (110) und quer zur Transportrichtung (TR) aufweisen,
c. wobei die Nutbreite (NB) im Ruhezustand des Transportbandes (100) um eine Zusatznutbreite (ZN) größer gewählt ist als die Elementbreite (EB).

7. Transportsystem (200)nach einem der Ansprüche 1 bis 6,
wobei die Zusatzstegbreite (ZS) dem Zusatzmittenabstand (ZA) entspricht.

8. Transportsystem (200)nach einem der Ansprüche 1 bis 7,
a. wobei die mindestens zwei Führungsnuten (111) parallel zur Führungsfläche (110) und orthogonal zur Transportrichtung (TR) eine Öffnungsbreite (OB) in einer Ebene mit der Führungsfläche (110) und eine Bodenbreite (BB) in einer um eine Nuttiefe (NT) der Führungsnut (111) von der Führungsfläche (110) beabstandeten Ebene aufweist,
b. wobei die Öffnungsbreite (OB) größer ist als die Bodenbreite (BB).

9. Transportsystem (200)nach einem der Ansprüche 1 bis 8,
wobei das Transportband (100) aus einem Thermoplast oder aus einem Elastomer besteht.

## Claims

1. A transport system (200) comprising an elastic conveyor belt (100) for transporting goods on the conveyor belt (100) in a transport direction (TR) in the transport system (200),
a. wherein the conveyor belt (100) has a guide surface (110),
b. wherein at least two guide grooves (111) extending along the transport direction (TR) are formed in the guide surface (110) for guiding the conveyor belt (100) along the transport direction (TR),
c. wherein the at least two guide grooves (111) are arranged with a groove centre distance (NA) transverse to the transport direction (TR) between them,
d. wherein the transport system (200) comprises at least two guide elements (211), of which exactly one engages in each of the at least two guide grooves (111) to guide the conveyor belt (100) along the transport direction (TR) ,
e. wherein the at least two guide elements (211) are arranged with an element centre distance (EA) transverse to the transport direction (TR) between them,
f. wherein the groove centre distance (NA) is selected to be greater than the element centre distance (EA) by an additional centre distance (ZA) in an unloaded rest state of the conveyor belt (100),
g. wherein the conveyor belt (100) has a web (112) on the guide surface (110) between the at least two guide grooves (111),
h. wherein the web (112) has a web width (SB) parallel to the guide surface (110) and orthogonal to the transport direction (TR),
i. wherein the transport system (200) has an intermediate space (212) between the at least two guide elements (211),
j. wherein the intermediate space (212) has an intermediate space width (ZB) parallel to the guide surface (110) and transverse to the transport direction (TR),
**characterised in that**
k. the web width (SB) is selected to be greater than the gap width (ZB) by an additional web width (ZS) in the rest state of the conveyor belt (100).

2. The transport system (200) according to claim 1,
wherein the additional centre distance (ZA) is from 0.05% to 5% of the element centre distance (EA).

3. The transport system (200) according to one of claims 1 to 2,
wherein a belt thickness (BD) of the conveyor belt (100) orthogonal to the guide surface (110) is from 0.1 mm to 20 mm.

4. The transport system (200) according to one of claims 1 to 3,
a. wherein the at least two guide grooves (111) have a groove depth (NT) orthogonal to the guide surface (110) and a groove width (NB) parallel to the guide surface (110) and orthogonal to the transport direction (TR),
b. wherein the groove depth (NT) and/or the groove width (NB) is from 0.25 mm to 5 mm.

5. The transport system (200) according to any one of claims 1 to 4,
a. wherein the at least two guide grooves (111) have a groove depth (NT) orthogonal to the guide surface (110) and a groove width (NB) parallel to the guide surface (110) and orthogonal to the transport direction (TR),
b. wherein the groove depth (NT) and/or the groove width (NB) is from 25% to 75% of a belt thickness (BD) of the conveyor belt (100) orthogonal to the guide surface (110) in the rest state of the conveyor belt (100).

6. The transport system (200) according to one of claims 1 to 5,
a. wherein the at least two guide grooves (111) have a groove width (NB) parallel to the guide surface (110) and orthogonal to the transport direction (TR),
b. wherein the at least two guide elements (211) have an element width (EB) parallel to the guide surface (110) and transverse to the transport direction (TR),
c. wherein the groove width (NB) is selected to be greater than the element width (EB) by an additional groove width (ZN) in the rest state of the conveyor belt (100).

7. The transport system (200) according to one of claims 1 to 6,
wherein the additional web width (ZS) corresponds to the additional centre distance (ZA).

8. The transport system (200) according to one of claims 1 to 7,
a. wherein the at least two guide grooves (111) have an opening width (OB) parallel to the guide surface (110), orthogonal to the transport direction (TR), and lying in a plane with the guide surface (110) and a bottom width (BB) parallel to the guide surface (110), orthogonal to the transport direction (TR), and lying in a plane spaced from the guide surface (110) by a groove depth (NT) of the guide groove (111),
b. wherein the opening width (OB) is greater than the bottom width (BB).

9. The transport system (200) according to one of claims 1 to 8,
wherein the conveyor belt (100) consists of a thermoplastic or an elastomer.

## Revendications

1. Système de transport (200) comprenant une bande transporteuse élastique (100) pour transporter des marchandises sur la bande transporteuse (100) dans une direction de transport (TR) dans le système de transport (200),
a. la bande transporteuse (100) présentant une surface de guidage (110),
b. au moins deux rainures de guidage (111) s'étendant le long de la direction de transport (TR) étant insérées dans la surface de guidage (110) pour guider la bande transporteuse (100) le long de la direction de transport (TR),
c. les au moins deux rainures de guidage (111) étant disposées avec un écartement entre les centres des rainures (NA) transversal à la direction de transport (TR),
d. le système de transport (200) comprenant au moins deux éléments de guidage (211) dont exactement un s'engage dans chacune des au moins deux rainures de guidage (111) pour guider la bande transporteuse (100) le long de la direction de transport (TR),
e. les au moins deux éléments de guidage (211) étant disposés avec un écartement entre les centres des éléments (EA) transversal à la direction de transport (TR),
f. l'écartement entre les centres des rainures (NA) étant choisi supérieur à l'écartement entre les centres des éléments (EA) d'un écartement supplémentaire (ZA) dans un état de repos non chargé de la bande transporteuse (100),
g. la bande transporteuse (100) présentant une nervure (112) sur la surface de guidage (110) entre les au moins deux rainures de guidage (111),
h. la nervure (112) présentant une largeur de nervure (SB) parallèle à la surface de guidage (110) et orthogonale à la direction de transport (TR),
i. le système de transport (200) présentant un espace intermédiaire (212) entre les au moins deux éléments de guidage (211),
j. l'espace intermédiaire (212) présentant une largeur d'espace intermédiaire (ZB) parallèle à la surface de guidage (110) et transversale à la direction de transport (TR),
**caractérisé en ce que**
k. la largeur de nervure (SB) est choisie supérieure à la largeur d'espace intermédiaire (ZB) d'une largeur de nervure supplémentaire (ZS) à l'état de repos de la bande transporteuse (100).

2. Système de transport (200) selon la revendication 1,
l'écartement supplémentaire (ZA) étant compris entre 0,05 % et 5 % de l'écartement entre les centres des éléments (EA).

3. Système de transport (200) selon l'une des revendications 1 à 2,
une épaisseur de bande (BD) de la bande transporteuse (100) perpendiculaire à la surface de guidage (110) étant comprise entre 0,1 mm et 20 mm.

4. Système de transport (200) selon l'une des revendications 1 à 3,
a. les au moins deux rainures de guidage (111) présentant une profondeur de rainure (NT) perpendiculaire à la surface de guidage (110) et une largeur de rainure (NB) parallèle à la surface de guidage (110) et perpendiculaire à la direction de transport (TR),
b. la profondeur de rainure (NT) et/ou la largeur de rainure (NB) étant comprise entre 0,25 mm et 5 mm.

5. Système de transport (200) selon l'une des revendications 1 à 4,
a. les au moins deux rainures de guidage (111) présentant une profondeur de rainure (NT) orthogonale à la surface de guidage (110) et une largeur de rainure (NB) parallèle à la surface de guidage (110) et orthogonale à la direction de transport (TR),
b. la profondeur de rainure (NT) et/ou la largeur de rainure (NB) étant comprise entre 25 % et 75 % d'une épaisseur de bande (BD) de la bande transporteuse (100) perpendiculairement à la surface de guidage (110) à l'état de repos de la bande transporteuse (100).

6. Système de transport (200) selon l'une des revendications 1 à 5,
a. les au moins deux rainures de guidage (111) présentant une largeur de rainure (NB) parallèle à la surface de guidage (110) et orthogonale à la direction de transport (TR),
b. les au moins deux éléments de guidage (211) présentant une largeur d'élément (EB) parallèle à la surface de guidage (110) et transversale à la direction de transport (TR),
c. la largeur de rainure (NB) étant choisie supérieure à la largeur d'élément (EB) d'une largeur de rainure supplémentaire (ZN) à l'état de repos de la bande transporteuse (100).

7. Système de transport (200) selon l'une des revendications 1 à 6,
la largeur supplémentaire de nervure (ZS) correspondant à l'écartement supplémentaire (ZA).

8. Système de transport (200) selon l'une des revendications 1 à 7,
a. les au moins deux rainures de guidage (111) présentant une largeur d'ouverture (OB) parallèle à la surface de guidage (110), orthogonale à la direction de transport (TR) et dans un plan avec la surface de guidage (110) et une largeur de fond (BB) parallèle à la surface de guidage (110), orthogonale à la direction de transport (TR) et dans un plan espacé de la surface de guidage (110) d'une profondeur de rainure (NT) de la rainure de guidage (111),
b. la largeur d'ouverture (OB) étant supérieure à la largeur de fond (BB).

9. Système de transport (200) selon l'une des revendications 1 à 8,
la bande transporteuse (100) étant constituée d'un thermoplastique ou d'un élastomère.
